# EUROPÄISCHE PATENTSCHRIFT

(11) **EP 0 953 789 B1**
(45) Veröffentlichungstag und Bekanntmachung des Hinweises auf die Patenterteilung: **16.06.2004**
(21) Anmeldenummer: 99810330.3
(22) Anmeldetag: 21.04.1999
(51) Int. Cl.: F16H 21/30, F02B 41/04, F16F 15/24

(54) **Kurbeltrieb**
Crank mechanism
Transmission à manivelle

(30) Priorität: 22.04.1998 CH 91698
(43) Veröffentlichungstag der Anmeldung: 03.11.1999
(73) Patentinhaber: Simon, Istvan, CH-8200 Schaffhausen (CH)
(72) Erfinder: Simon, Istvan, CH-8200 Schaffhausen (CH)
(74) Vertreter: Peege, Klaus

(56) Entgegenhaltungen:
- WO-A-88/04356
- BE-A- 471 253
- DE-A- 3 927 535
- US-A- 2 140 127
- US-A- 4 152 955
- PATENT ABSTRACTS OF JAPAN vol. 007, no. 081 (M-205), 5. April 1983 (1983-04-05) & JP 58 008233 A (ISAMU NEMOTO), 18. Januar 1983 (1983-01-18)

## Beschreibung

Die Erfindung betrifft einen Kurbeltrieb nach dem Oberbegriff des Patentanspruches 1.

Unter einem Kurbeltrieb wird ein im wesentlichen wellenförmiges mit Kröpfungen versehenes Verbindungsteil verstanden, das einends eingeleitete Kräfte, beispielsweise Antriebskräfte, anderenends einen Verbraucher zuleitet. Unterschieden werden kann zwischen horizontalen Kurbeltrieben und vertikalen Kurbeltrieben. Liegt eine Kraftquelle (z.B. ein Motor) stationär zum Kurbeltrieb und wird eine Drehbewegung stirnseitig von dem Abtrieb der Kraftquelle auf den Kurbeltrieb übertragen, so fällt eine solche Ausführungsform unter die Bezeichnung "horizontaler Kurbeltrieb". Ein Beispiel wäre ein direkt an die Antriebswelle eines Elektromotors angeflanschter Kurbeltrieb. Umkreist dagegen der Abtrieb einer Antriebseinrichtung die Horizontale, d.h. Längsachse eines Kurbeltriebes, so wird dieser Ausgestaltung die Bezeichnung "vertikaler Kurbeltrieb" zugeordnet. Eine Antriebseinrichtung dieser Art wäre beispielsweise ein Hubkolbenmotor, dessen Kolbenstange (Pleuelstange) einends mit der Kröpfung eines Kurbeltriebes in Eingriff stehend den Kurbeltrieb umkreist.

Kurbeltriebe sind Belastungen ausgesetzt, die in Durchbiegungen, Torsion und Schwingungen resultieren. Schwingungen beispielsweise zerstören allmählich das Gefüge des Werkstoffes eines Kurbeltriebes und leiten Ermüdungsbrüche ein.

Um Ermüdungsbrüchen vorzubeugen, werden Kurbeltriebe mit Einrichtungen ausgestattet, deren Aufgabe darin besteht, die Schwingungen zu dämpfen. Durchbiegungen wirken vermehrt Lagerungen entgegen, während gegen die Torsion der Kurbeltriebe Abhilfe durch besondere Ausbildung Massenkräfte auslösender Teile gesucht wird. Im übrigen kennzeichnen sich Kurbeltriebe auch dadurch, dass der konzentrische Kurbelgetriebeteil (die ineinander folgenden Antriebs-, Abtriebsenden und Lagerzapfen) und der exzentrische Kurbeltriebteil (Kröpfung und Kurbelzapfen) mit gleicher Drehzahl drehen. Keine Möglichkeit besteht bei angetriebenem konzentrischen oder exzentrischen Kurbelgetriebeteil, das jeweils andere Kurbelgetriebeteil mit einer anderen Drehzahl (grösser oder kleiner) drehen zu lassen. Die Meidung dieser Nachteile ist Aufgabe der Erfindung, die durch einen Kurbeltrieb mit den kennzeichnenden Merkmalen des Patentanspruches 1 gelöst wird.

Kurbeltriebe, insbesondere Vertikal-Kurbeltriebe, werden bekannterweise ungeteilt, d.h. einteilig bei hoher Belastung im Gesenk geschmiedet oder bei niedrigerer Belastung in einer Form gegossen. Gesenk- wie Gussprodukt kennzeichnen sich dadurch, dass bei einer einfachen Ausführungsform zwei axial gleichlaufende (koaxiale) Lagerzapfen und ein dazu exzentrischer (beabstandeter) und gleichgerichtet laufender Kurbelzapfen, letzterer beidseits über Kurbelwangen mit den Lagerzapfen so verbunden ist (Kurbelwangen und Kurbelzapfen die Kröpfung bildend), dass der Kurbelzapfen bei Drehung des Kurbeltriebes die gemeinsame Achse der Lagerzapfen beabstandet umläuft. Auch bekannt sind geteilte Kurbeltriebe, deren Teile entweder zusammengepresst oder fest miteinander verschraubt werden. Dabei werden Pressungen oder Verschraubungen so ausgeführt, dass ein geteilter Kurbeltrieb technisch identisch im Vergleich zu einem ungeteilten wird. Von den einteilig starren Kurbeltrieben, geschraubte Kurbeltriebe sind den einteiligen starren Kurbeltrieben zuzurechnen, rückt die Erfindung mit der Lehre ab, Kurbeltriebe nicht einteilig und starr, sondern mehrteilig, die Teile miteinander mechanisch zusammenwirkend, dadurch quasi flexibilisiert, auszubilden. Vereinfacht ausgedrückt ersetzt die Erfindung die bekannten starren Kurbelwangen durch Drehträger und Zahnräderwerke, die über eine Stützwelle mit dem Drehträger zusammenwirkend die Bewegung eines Kolbenstangenendes auf einer Kreisbahn in eine um eine Längsachse ablaufende Rotationsbewegung von Lagerzapfen umsetzt. Mit dieser Anordnung werden Kurbeltriebbelastungen nachhaltig abgebaut, ferner die Möglichkeiten von Zahräderwerken (Über-, Untersetzungen) genutzt.

Dem steht auch nicht die Lehre der US PS 2.140.127 entgegen, die eine gattungsgemäße Kurbelwelle offenbart, die aus zwei zueinander parallel angeordneten Wellen, einer Antriebswelle und einer von der Antriebswelle angetriebenen Antriebswelle besteht. Die Antriebswelle, die hin- und hergehende Bewegungen eines Pleuels in eine Drehbewegung umwandelt, trägt zwei konzentrisch zueinander angeordnete Zahnräder, wobei das äussere aussen- und innenverzahnt und das innere nur aussenverzahnt ist. Zwischen den Rädern, d.h. der äusseren Verzahnung des Innenrades und der inneren Verzahnung des äusseren Rades läuft ein mit dem Pleuelende fest verbundenes Treibrad. In dieser Ausführungsform werden zwei Wellen zur Umsetzung einer hin- und hergehenden Bewegung in eine Drehbewegung benötigt.

Vorteilhafte Ausgestaltungen des Kurbeltriebes nach Patentanspruch 1 kennzeichnen die dem Patentanspruch 1 folgenden Patentansprüche.

Weitere Vorteile, Merkmale und Einzelheiten der Erfindung ergeben sich aus der folgenden Beschreibung eines bevorzugten Ausführungsbeispieles und der Zeichnung. Es zeigen:
- Fig. 1:: ein Kurbeltrieb gemäss der Erfindung mit zwei Kolbenstangen zusammenwirkend und mit einends am Kurbeltrieb angeordnetem Hebeltrieb in der Seitenansicht, teilweise im Schnitt.
- Fig. 2:: den Hebeltrieb gemäss Fig. 1 in Einzeldarstellung zwischen den Schnittlinien I/I - II/II in der Seitenansicht.

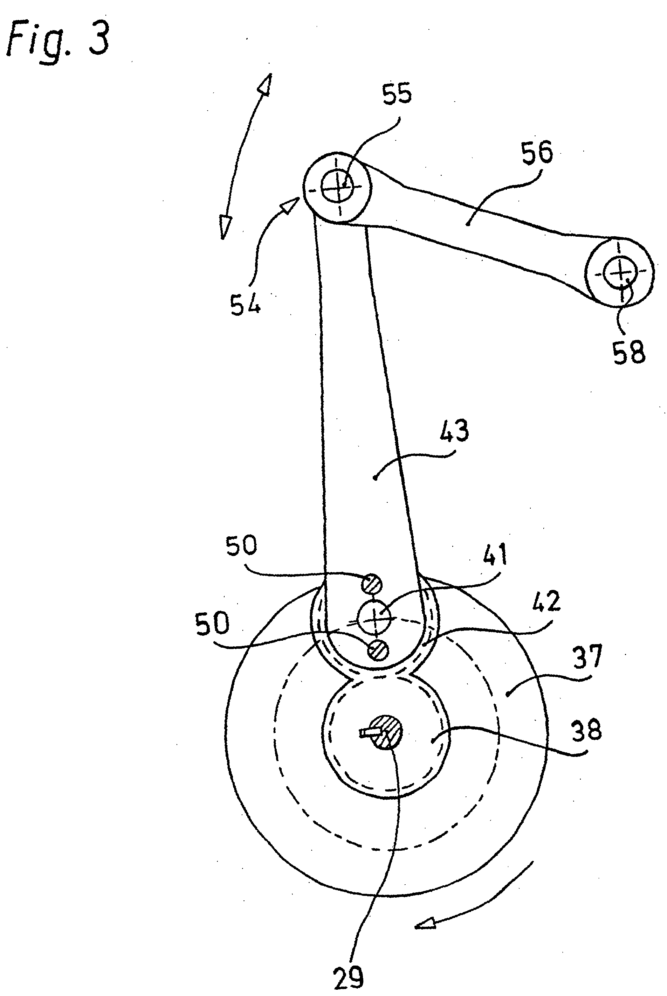

- Fig. 3:: eine Vorderansicht des Hebeltriebes gemäss Fig. 2 (Blickrichtung A)
- Fig. 4:: einem Teil des Kurbeltriebes gemäss Fig. 1 zwischen den Schnittlinien II/II - III/III in teilweise auseinandergezogener Darstellung in der Seitenansicht und teilweise im Schnitt.
- Fig. 5:: einen Schnitt entlang der Linie IV/IV in der Vorderansicht (Blickrichtung B,B) und teilweise im Schnitt, Fig. 5 teilweise ergänzt um einen in Fig. 1 nicht dargestellten Zylinder.
- Fig. 6:: einen Schnitt entlang der Linie II/II in der Seitenansicht (Blickrichtung C) teilweise im Schnitt, mehrere einander nachgeordnete Hebeltriebe zeigend, die gesamthaft ein Drehzahlgetriebe bilden.

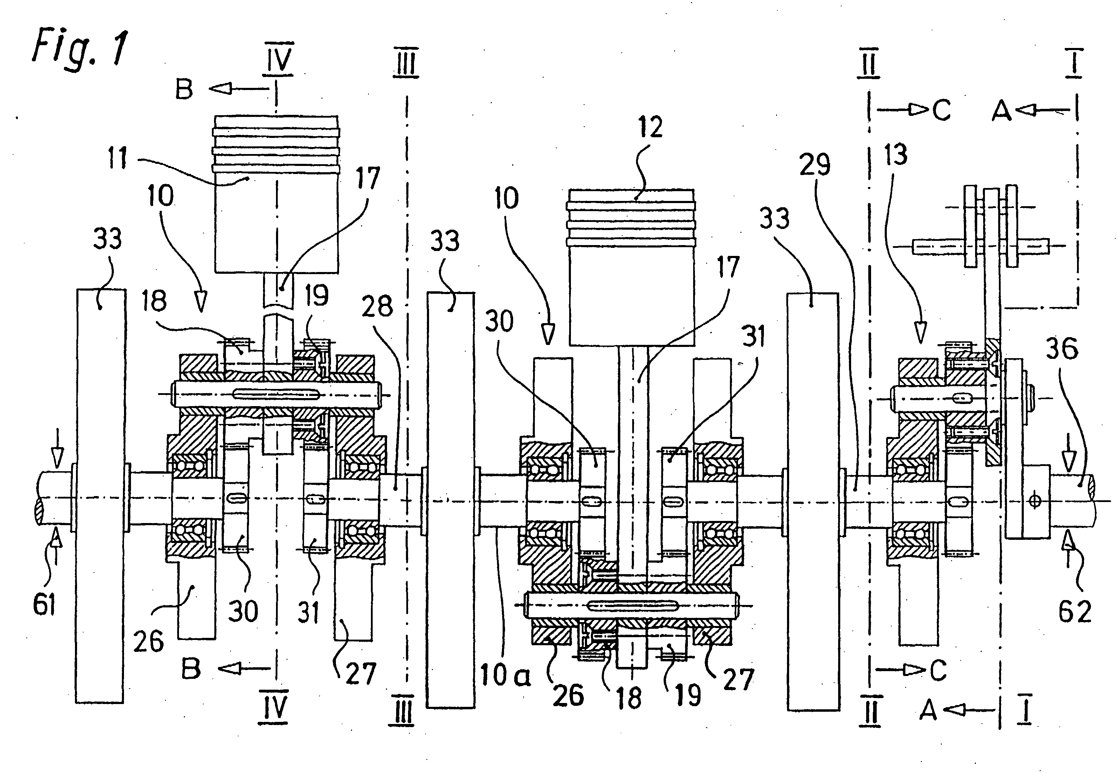

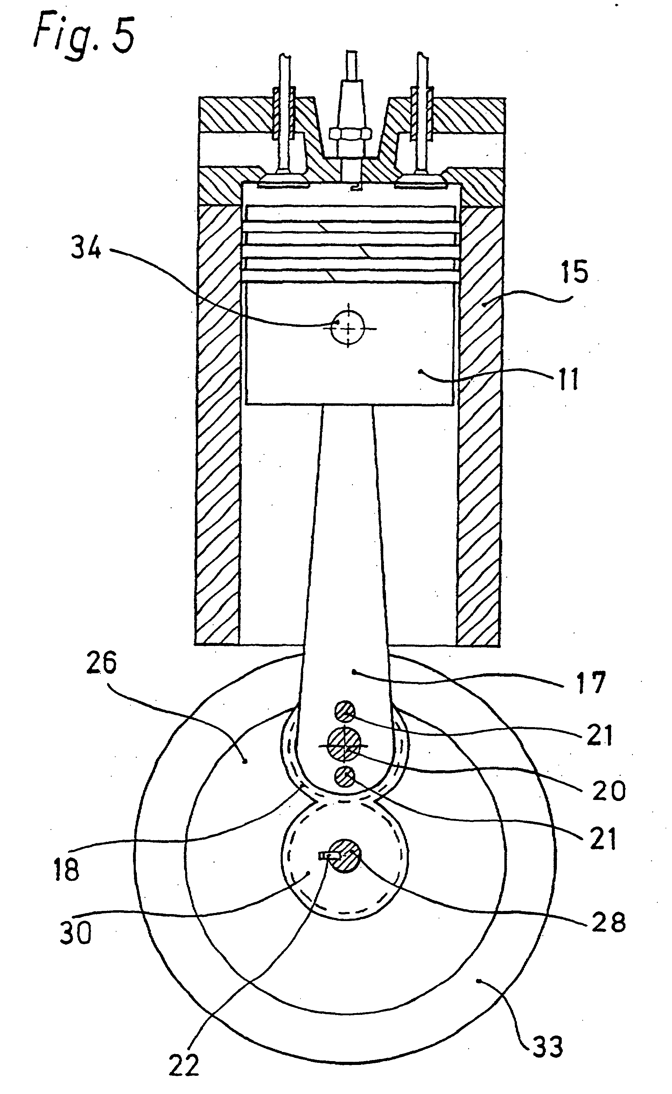

Fig. 1 zeigt zwei erfindungsgemäss ausgebildete Kurbeltriebe 10, die über eine gemeinsame Welle 10a miteinander verbunden sind. Dieser Zweierkurbeltrieb wirkt mit Kolben 11 und 12 und daran angelenkten Kurbelstangen 17 zusammen, wobei die Kolben 11 und 12 ihrerseits in Zylindern 15 (Fig. 5) von Kolbenzylinder Einrichtungen laufen. Mit 13 ist ein Hebeltrieb bezeichnet, der zur Erfindung gehörend dazu dient, Abtriebsdrehzahlen des Kurbeltriebes 10 zu erhöhen.

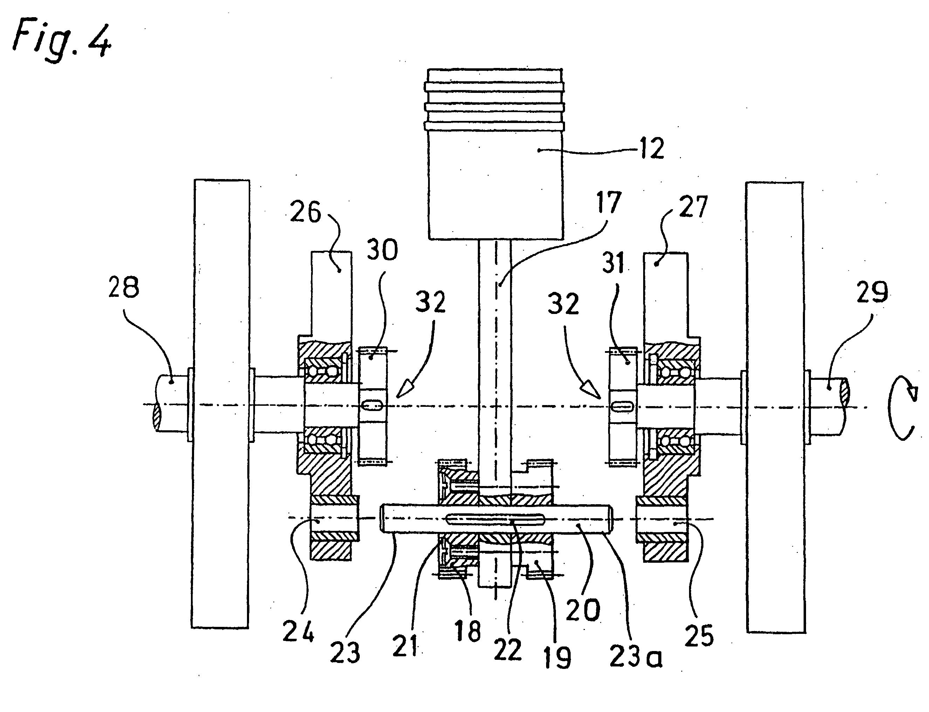

Folgend wird der Kurbeltrieb 10 nach der Erfindung an Hand der Fig. 4 beschrieben, die den Kurbeltrieb 10 teilweise vereinzelt darstellt. Der Kolben 12 wirkt mit einer Kolbenstange 17 zusammen, die einends d.h. kolbenseitig in einer Schwenkebene (z.B. senkrecht zur Zeichenebene) schwenkbar über einen Kolbenbolzen 34 mit dem Kolben 12 in Eingriff steht und die anderenends, d.h. an ihrem dem Kolben 12 abgewandten Ende ein Zahnräderpaar bestehend aus den Treibrädern 18 und 19 und Stützwelle 20 trägt. Die Treibräder 18, 19 sind jeweils einfach einander gegenüberliegend auf den Seiten der Kolbenstange 17 angeordnet, die parallel zur Schwenkebene der Kolbenstange 17 liegen. Die Treibräder 18, 19 sind konzentrisch zueinander fest mit der Kolbenstange 17 beispielsweise durch Schraubverbindungen 21 verbunden. Axialmittig werden die Treibräder 18, 19 von der Stützwelle 20 durchgriffen, die gegen Drehung gegen die Treibräder 18, 19 und das freie Ende der Kolbenstange 17 beispielsweise vermittels eines Keiles 22 gesichert ist. Die freien Enden 23, 23a der Stützwelle 20 greifen in Buchsen 24, 25 (Ende 23 in Buchse 24, Ende 23a in Buchse 25) ein und sind (siehe Fig. 1) darin drehbar aufgenommen. Die Buchsen 24, 25 sind einzeln in Drehträgern 26, 27 aufgenommen (Buchse 24 in Drehträger 26, Buchse 25 in Drehträger 27). Die Buchsen 24, 25 sind auf den Drehträgern 26, 27 auf Kreisen angeordnet, deren Radius von der Mittellinie der Wellen 28, 29 sich nach dem halben Durchmesser eines Treibrades 18, 19 und eines getriebenen Rades 30, 31 in Abhängigkeit der Länge eines Hubweges eines Kolbens 11, 12 bestimmt (Exzentrizität, d.h. Beabstandung der gemeinsamen Mittelline der Treibräder 18, 19 und Stützwelle 20 zur Mittellinie, d.h. Drehachse der Wellen 28, 29). Die Drehträger 26, 27 sind drehbar auf den Wellen 28, 29 angeordnet und an die freien, der Kolbenstange 17 zugewandten Enden 32 der Wellen 28, 29 sind die getriebenen Zahnräder (kurz Räder) 30, 31, beispielsweise vermittels einer Keilverbindung angeordnet. Fig. 1, den Kurbeltrieb 10 zusammengeführt zeigend, verdeutlicht, dass das freie Ende der Kolbenstange 17 zwischen zwei koaxial (gleichgerichtet einander folgend) zueinander verlaufenden Wellen 28, 29 mit einander gegenüberliegenden, zwischen sich einen Abstand belassenden Wellenenden, d.h. in dem Abstand angeordnet, mit zwei konzentrisch beabstandeten Treibrädern 18, 19 fest verbunden ist, dass eine die Treibräder 18, 19 und das freie Ende der Kolbenstange 17 axial durchgreifende Stützwelle 20 vorgesehen ist, die die Kolbenstange 17 und die Treibräder 18, 19 nicht drehbar durchgreift, wobei je ein freies Ende 23, 23a der Stützwelle 20 in eine Buchse 24, 25 drehend eingreift (Drehlager), die ihrerseits in einem scheibenförmigen Drehträger 26, 27 aufgenommen ist, der seinerseits frei drehend auf einer Welle 28, 29 angeordnet ist, und dass die Treibräder 18, 19 mit fest (nicht drehend) auf den Wellen 28, 29 angeordneten Rädern 30, 31 in Dreheingriff stehen.

Die Funktionsweise des Kurbeltriebes 10 nach der Erfindung ist folgende. Wird die Drehung des Kurbeltriebes 10 durch eine Hin- und Herbewegung eines Kolbens 11 verursacht, so beschreibt das freie Ende der Kolbenstange 17 - der Kolben ausgehend von einem oberen Umkehrpunkt über einen unteren Umkehrpunkt zurück zum oberen Umkehrpunkt - angelenkt an den Kurbeltrieb 10 eine Bewegung auf einer Kreisbahn, um die Wellen 28, 29 deren Radius sich nach der Länge des Hubweges und davon abgeleitet nach der Summe der halben Durchmesser eines Treib- 18 und getriebenen Rades 30 bestimmt. Mit dem freien Ende der Kolbenstange 17 laufen auch die Treibräder 18, 19 und die Stützwelle 20 auf gleicher Kreisbahn - das freie Ende der Kolbenstange 17 mit Stützwelle 20 und Treibrädern 18, 19 beidseits über die freien Enden 23, 23a der Stützwelle 20 in den Drehträgern 26, 27 drehend abgestützt - um. Bei einer Umlaufbewegung werden die Drehträger 26, 27 über die in ihnen drehbar aufgenommenen freien Ende 23, 23a der Stützwelle 20 in Drehung um die Wellen 27, 28 gebracht. Der Ort der Abstützung des freien Endes der Kolbenstange 17 folgt somit der Kreisbewegung des freien Endes letzterer. Bei dieser Kreis- oder Umlaufbewegung umlaufen die selbst nicht drehbaren Treibräder 18, 19 die auf den Wellen 28, 29 konzentrisch zur Längsachse letzterer fest angeordneten Räder 34, 31 und treiben diese mit den Wellen 28, 29 an, wobei diese Drehbewegung an einem dafür bestimmten Ende der Wellen 28, 29 abgenommen werden kann. Gezeigt sind in Fig. 1 und 4 Zahnräder (Treibräder, getriebene Räder) gleicher Grösse, also mit einer 1:1 Übersetzung, was bewirkt, dass sich bei einer vollständigen Hin- und Herbewegung der Kolben 11, 12 die Wellen 28, 29 zweimal drehen. Auf eine 1:1 Übersetzung sind die Radpaarungen (Treibrad, getriebenes Rad) nicht beschränkt, je nachdem welche Umdrehungszahl der Wellen 28, 29 bei einer Hin- und Herbewegung der Kolben 11, 12 angestrebt wird, sind Zahnradpaarungen mit entsprechenden Übersetzungsverhältnissen unter Berücksichtigung der einzuhaltenden Längen der Hubwege einsetzbar. Vorstehend wurde die Funktionsweise des erfindungsgemässen Kurbeltriebes 10 unter Kolbenantrieb (z.B. Verbrennungskraftmaschinen, schematische Darstellung in Fig. 5 mit Zylinder 15) beschrieben. Ohne konstruktive Änderungen des erfindungsgemässen Kurbeltriebes 10 wie beschrieben, kann dieser auch direkt angetrieben werden, (Antrieb einer Welle 28, 29), um die Kolben 11, 12 in Bewegung zu versetzen. In diesem Fall würden getriebene Räder zu Treibrädern und umgekehrt. Zur Vergleichmässigung der Bewegungsabläufe von Kurbeltrieb 10 insbesondere der der Kolben 11, 12 tragen die Wellen 28, 29 bevorzugt Schwungräder 33.

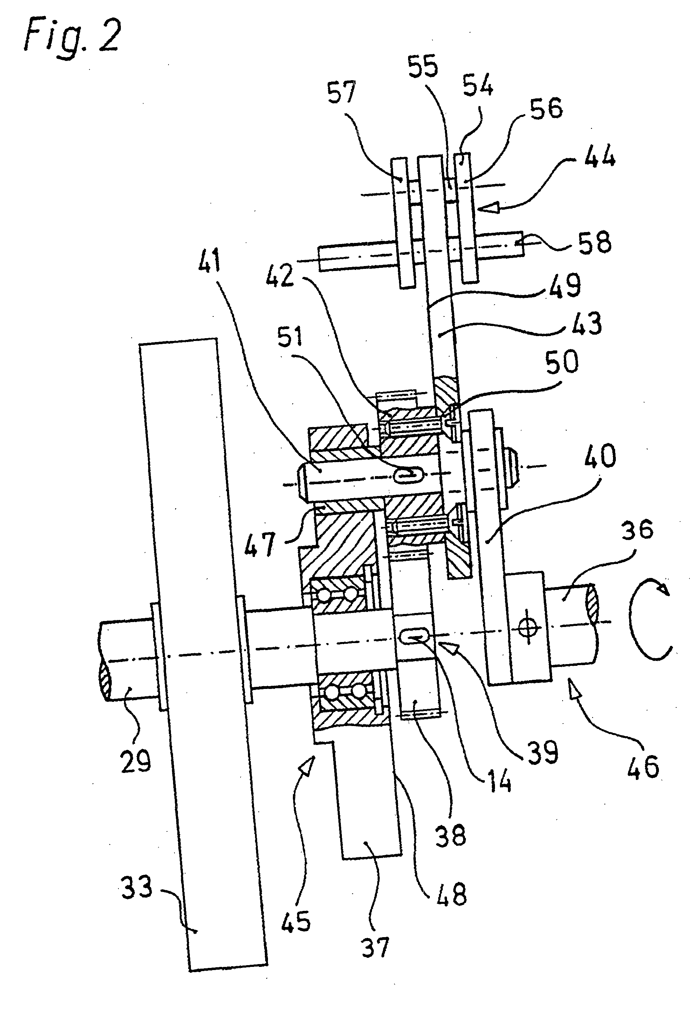

Gemäss Fig. 1 trägt die Welle 29 den Hebeltrieb 13, der die Welle 29 mit einer Abtriebswelle 36 verbindet. Der Hebeltrieb 13 wird folgend im Zusammenhang mit Fig. 2 beschrieben. Der Hebeltrieb 13 umfasst eine Lagerscheibe 37, die frei drehbar auf der Welle 29 angeordnet ist und einen Drehkörper 38, der am antriebseitigen, freien Ende 39 der Welle 29 vermittels eines Keiles 14 angeordnet ist. Abtriebswelle 36 und Welle 29 sind als Wellen getrennt, jedoch über einen Antriebshebel 40 mit an seinem freien Ende angeordneten Wellenstumpf 41 über einen verzahnten Treiber 42 mit dem verzahnten Drehkörper 38 und der Lagerscheibe 37 verbunden, wobei der Treiber 42 an einen Tragarm 43 fest angelenkt ist, der sich seinerseits an einer Trageinheit 44 abstützt. Vereinfacht dargestellt umschliesst der Hebeltrieb 13 einen treibenden Teil 45 und einen getriebenen Teil 46. Der treibende Teil umfasst die frei drehbar auf der Welle 29 angeordnete Lagerscheibe 37 mit einer die Lagerscheibe 37 axial (radial beanstandet zur Achse der Lagerscheibe 37) durchgreifenden Lagerung 47, deren Aufgabe ist, das freie (zum Antrieb gerichtete) Ende des Wellenstumpfes 41 als Komponente des getriebenen Teiles 46 drehbar in der Lagerscheibe 37 aufzunehmen und gleichzeitig abzustützen. Mit dem Ende der Abtriebswelle 36 ist, von der Abtriebswelle 36 radial abragend, der Antriebshebel 40 verbunden, der an seinem freien (von der Abtriebswelle 36 abragenden) Ende, den Wellenstumpf 41 trägt, der sich parallel (radial beabstandet) zu den Achsen der Welle 29 und der Abtriebswelle 36 erstreckt. Der Wellenstumpf 41 ist einends (Ende zur Abtriebswelle 36) am Antriebshebel 40 und anderenends in der Lagerscheibe 37 gehaltert. In Richtung auf die Lagerscheibe 37 dem Antriebshebel 40 folgend durchgreift der Wellenstumpf 41 nicht drehbar das freie (der Trageinheit 44 abgewandte) Ende des Tragarmes 43. Zwischen Stirnfläche 48 der Lagerscheibe 37 und der dieser Stirnfläche 48 gegenüberliegenden Seite 49 des Tragarmes 43 ist der Treiber 42 auf dem Wellenstumpf 41 so angeordnet, dass Treiber 42 und Drehkörper 38 miteinander in Wirkeingriff stehen, wobei die Summe der halben Durchmesser von Drehkörper 38 und Treiber 42 den Abstand zwischen der Längsachse der Welle 29 und der des Wellenstumpfes 41, d.h. den Radius der Kreisbahn bestimmen, auf der der Wellenstumpf 41 die Längsachse der Welle 29 umläuft. Der Treiber 42 ist über eine seiner Stirnflächen mit der Seite 49 des Tragarmes 43 fest verbunden (Verschraubung 50), gleichermassen ist der Treiber 42 über eine Keilverbindung 51 gegen Drehung um den Wellenstumpf 41 gesichert. So legt der Treiber 42 über seine Verschraubung 50 und den Keil das vordere Ende des Tragarmes 43 an dem Wellenstumpf 41 fest, wobei sich letztere in der Buchse 47 und im Antriebshebel 40 drehen kann.

Das Ende des Tragarmes 43 das dem Treiber 42 gegenüberliegt ist zwischen den Ende 54 von zwei Hebelarmen 56, 57 um eine Halterung 55 schwenkbar aufgenommen, während die anderen Enden der Hebelarme 56, 57 an einer ortsfesten Stütze 58, d.h. an einem Maschinenteil ortsfest angelenkten Stütze 58, schwenkbar angelenkt sind. Die Trageinheit 44, umfassend zwei parallel beabstandete Hebelarme 56, 57, einends schwenkbar um eine ortsfeste Stütze 58 und dazu frei abragend anderenends den Tragarm 43 zwischen sich schwenkbar aufnehmend, legt das bezeichnete Ende 54 des Tragarmes 43 so fest, dass der Treiber 42 am Tragarm 43 nicht drehend befestigt den Drehkörper 38 umlaufen kann.

Wird der Drehkörper 38 angetrieben, so lässt seine Drehbewegung den Treiber 42 um seinen äusseren Umfang umlaufen, d.h. Drehkörper 38 und Treiber 42 walzen sich gegeneinander ab. Während dieses Umlaufes läuft auch der Wellenstumpf 41, abgestützt in der frei drehenden Lagerscheibe 37, um den Drehkörper 38 um, wobei der Wellenstumpf 41 über den Antriebshebel 40 diesen Umlauf als Drehbewegung auf die Abtriebswelle 36 überträgt. Bei diesem Umlauf des Treibers 42 um den Drehkörper 38 übernimmt der Tragarm 43 die Aufgabe, den Treiber 42 geführt und in Eingriff auf dem Umlauf um den Drehkörper 38 zu halten.

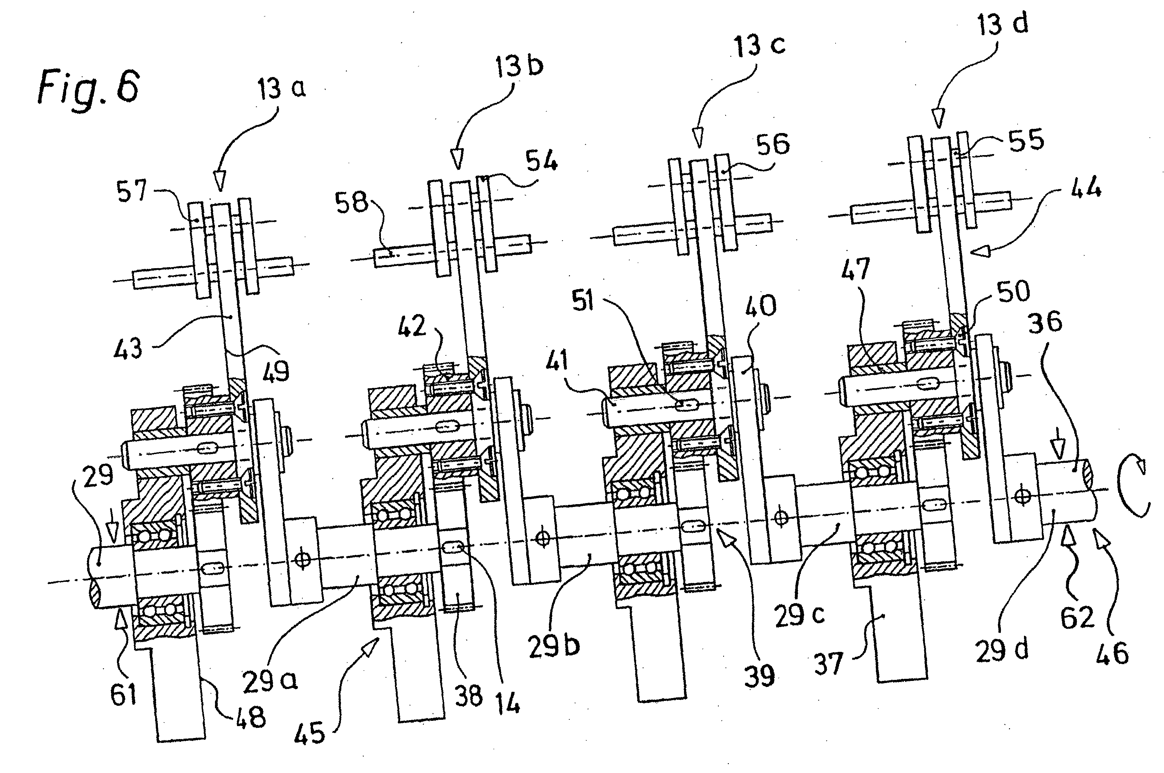

Fig. 6 zeigt mehrere, dargestellt sind beispielsweise vier, nacheinander angeordnete Hebeltriebe 13a, 13b, 13c und 13d in Lagern 61, 62 drehend abgestützt, die gleich ausgebildet sind wie der im Zusammenhang mit Fig. 2 beschriebene Hebeltrieb 13, ein sogenanntes Drehzahlgetriebe bildend. Angetrieben wird der Hebeltrieb 13a beispielsweise von der Welle 29 des Kurbeltriebes 10 (nicht gezeigt). Der Hebeltrieb 13a überträgt die Drehbewegung der Welle 29, auf die Welle 29a, auf der der Hebeltrieb 13b sitzt, wobei diese Welle 29a ihre Drehbewegung über den Hebeltrieb 13b auf die Welle 29b überträgt. Diese Übertragung setzt sich bezüglich der Hebeltriebe 13c und 13d und der Wellen 29c und 29d beispielshalber zweimal fort. Ist 29 die Welle des Antriebes, so wäre 29d die des Abtriebes oder umgekehrt.

Mit dem erfindungsgemäss ausgebildeten Kurbeltrieb werden folgende Vorteile erreicht:
1. Der Kurbeltrieb ist flexibilisiert, d.h. nicht starr ausgebildet, wodurch die an ihn angreifenden Kräfte (Torsion etc.) abgebaut werden
2. Durch Bemessung der Zahnräder kann die Welle pro Hub (Hin und Her) ein- oder mehrmals drehen, dadurch wird die in Hubkolbenmaschinen eingeleitete Energie besser genutzt.

Verwendbar sind genormte, Rollen- oder Kugellager, die Verwendung von Gleitlagern mit ihren Nachteilen ist dadurch vermieden. Der erfindungsgemässe Kurbeltrieb vermeidet durch seine einfache Montage und Demontage die Fertigungsnachteile geschmiedeter und gegossener Kurbeltriebe, durch die Hebeltriebe sind Drehzahlveränderungen (Erhöhung, Reduktion) mit einfachen Mitteln erreichbar.

## Patentansprüche

1. Kurbeltrieb für Kolbenmaschinen, beispielsweise Verbrennungskraftmaschinen, Kolbenkompressoren, Kolbenpumpen oder dergleichen Kolbenmaschinen mit mindestens einem in einem Zylinder hin- und hergehenden, dabei Längen von Hubwegen durchfahrenden Kolben (11,12), mit einer den Kolben (11,12) mit einem Kurbeltrieb (10) verbindenden Kolbenstange (17), wobei der Kurbeltrieb (10) zur Umsetzung der hin- und hergehenden Bewegung des Kolbens (11,12) in eine Drehbewegung oder umgekehrt dient, der Kurbeltrieb (10) umfassend zwei koaxial zueinander verlaufende Wellen (28,29), mit einander gegenüberliegenden, zwischen sich einen Abstand A belassenden Wellenenden (32), zwischen den Wellenenden (32) das den Kolben (11,12) mit dem Kurbeltrieb (10) verbindende, drehende freie Ende der Kolbenstange (17), beidseits auf den zueinander koaxialen Wellen (28,29) abgestützt und die koaxialen Achsen der Wellen (28,29) auf einer Kreisbahn beabstandet umlaufend, und mit beidseits am freien Ende der Kolbenstange (17) konzentrisch zueinander angeordneten, nicht drehend ausgebildeten Treibrädern (18,19)
**dadurch gekennzeichnet, dass**
- die Treibräder (18, 19) mittig von einer im freien Ende der Kurbelstange (17) nicht drehbaren Stützwelle (20) mit freien Enden (23,23a) durchgriffen werden,
- Drehträger (26,27) frei drehend auf den Wellen (28,29) vorgesehen sind,
- die freien Enden (23,23a) der Stützwelle (20) drehbar in die Drehträger (26,27) in Buchsen (24,25) eingreifen, die in Richtung der Längsachse der Drehträger (26,27) dazu radial beabstandet in den Drehträgern (26,27) vorgesehen und
- die Treibräder (18,19) mit nicht drehend auf den Enden (32) der Wellen (28,29) angeordneten getriebenen Rädern (30,31) in Eingriff stehend ausgebildet sind.

2. Kurbeltrieb nach Anspruch 1, **dadurch gekennzeichnet, dass** die Treibzahnräder (18,19) fest an dem freien Ende der Kolbenstange (17) angeordnet sind.

3. Kurbeltrieb nach Anspruch 1 oder 2, **dadurch gekennzeichnet, dass** die Treibzahnräder (18,19) vermittels einer Schraubverbindung an dem freien Ende der Kolbenstange (17) angeordnet sind.

4. Kurbeltrieb nach einem der Ansprüche 2 oder 3, **dadurch gekennzeichnet, dass** die Stützwelle (20) vermittels eines Keiles (22) nicht drehbar am freien Ende der Kolbenstange (17) und in den Treibzahnrädern (18,19) angeordnet ist.

5. Kurbeltrieb nach einem der Ansprüche 1 bis 4, **dadurch gekennzeichnet, dass** eine oder beide Wellen (28,29) mit einem Hebeltrieb (13) verbunden sind.

6. Kurbeltrieb nach Anspruch 5, **dadurch gekennzeichnet, dass** der Hebeltrieb (13) aus einem treibenden Teil (45) und einem getriebenen Teil (46) besteht, wobei der treibende Teil (45) auf einer Welle (29) des Kurbeltriebes (10) und der getriebene Teil (46) auf einer Abtriebswelle (36), Welle (29) und Abtriebswelle (36) koaxial, d.h. gleichgerichtet einander folgend, angeordnet sind.

7. Kurbeltrieb nach einem der Ansprüche 5 oder 6, **dadurch gekennzeichnet, dass** der getriebene Teil (46), umfasst
(a) einen an der Abtriebswelle (36) fest angeordneten Antriebshebel (40)
(b) einen Tragarm (43) mit an seinem vorderen freien Ende fest angeordneten, beidseits abgestützten verzahnte Treiber (42), der Tragarm (43) mit dem Antriebshebel (40) in Dreheingriff stehend
(c) eine auf der Welle (29) des Kurbeltriebes (10) frei drehend angeordnete Lagerscheibe (37), und
(d) einen am Antriebshebel (40) angeordneten, den Tragarm (43) mit daran fest angeordnetem Treiber (42) nicht drehbar durchgreifenden, in der Lagerscheibe (37) drehend aufgenommenen Wellenstumpf (41).

8. Kurbeltrieb nach einem der Ansprüche 5 bis 7, **dadurch gekennzeichnet, dass** der treibende Teil (45) ein auf der Welle (29) fest angeordneter und mit dem verzahnten Treiber (42) in Dreheingriff stehender verzahnter Drehkörper 38 ist.

9. Kurbeltrieb nach einem der Ansprüche 5 bis 8, **dadurch gekennzeichnet, dass** der Tragarm (43) an seinem dem verzahnten Treiber (42) gegenüberliegenden Ende an einer Halterung (55) schwenkbar angelenkt ist.

10. Kurbeltrieb nach einem der Ansprüche 5 bis 9, **dadurch gekennzeichnet, dass** Kolben (11,12) und Kurbelstange (17) durch Wechsel von Zahnrädern (treibendes Rad 18,19, getriebenes Rad 30,31) zum Kurbeltrieb einstellbar ist.

11. Kurbeltrieb nach einem der Ansprüche 5 bis 10, **dadurch gekennzeichnet, dass** sich Drehzahlen der Wellen (28,29) nach dem Zähnezahlverhältnis zwischen den treibenden Zahnrädern (18,19) und getriebenen Zahnrädern (30,31) bestimmt.

## Claims

1. A crank assembly for piston machines, for example internal combustion engines, reciprocating compressors, plunger pumps or the like plunger machines with at least one plunger (11, 12) in a cylinder, said plunger (11, 12) travelling through certain length of heights of lift with a connecting rod (17) connecting said plunger (11, 12) with a crank assembly (10), whereby the crank assembly (10) serves for transformation or a reciprocating into a rotative movement, the crank assembly (10) comprising two coaxially arranged shafts (28, 29) having shaft ends (32) in opposed positions to each other leaving a spacing (A) between said shaft ends (32) wherein between the shaft ends (32) is arranged the free rotating end of the piston rod (17) connecting the piston (11, 12) with the crank assembly (10) on both sides being supported on the coaxially arranged shafts (28, 29) rotating at a spacing around the coaxial axis of said shafts (28, 29) with a pair of non rotating gear wheels (18, 19) arranged on both sides of the free end of the connecting rod, characterised thereby that
- the gear wheels (18, 19) are centrally passed through by a support shaft (20) non-rotative arranged in the free end of the piston rod (17),
- rotating carriers (26, 27) freely rotating on the shafts (28, 29) are provided,
- the free ends (23, 23a) of the support shaft (20) in bushings (24, 25) rotative engage with the rotating carriers (26, 27) which bushings (24, 25) in direction of the longitudinal axis of the rotating carriers (26, 27) are radially spaced in the rotating carriers (26, 27), and
- the driving gears (18, 19) are in mesh with nonrotating driven gears (30, 31) arranged upon the ends (32) of the shafts (28, 29).

2. Crank assembly according to claim 1, characterised thereby that the driving gears (18, 19) are firmly arranged on the free end of the piston rod (17).

3. Crank assembly according to claim 1 or 2, characterised thereby that the driving gears (18, 19) are arranged on the free end of the piston rod by way of a screw arrangement.

4. Crank assembly according to claim 2 or 3, characterised thereby that the supporting shaft (20) is not rotatively arranged upon the free end of the piston rod (17) and the driving gears (18, 19) by means of a key (22).

5. Crank assembly according to one of the claims 1 to 4, characterised thereby that that one or both shafts (28, 29) are connected to lever drive arrangement (13).

6. Crank assembly according to claim 5, characterised thereby that the lever drive arrangement (13) comprises a driving part (45) and a driven part (46) whereby the driving part (45) is arranged on a shaft (29) of the crank assembly (10) and the driven part (46) is arranged on a drive output shaft (36) and a shaft (29) coaxially arranged one following the other.

7. Crank assembly according to one of the claims 5 or 6 characterised thereby that the driven part (46) comprises
a) a drive lever (40) fixedly on the output drive shaft (36)
b) a carrier arm (43) having a free end toothed drivers (42) at both sides and fixedly arranged at the free end of the carrier arm (43), the carrier arm (43) being in rotatable engagement with the drive lever (40)
c) a mounting disk (37) freely rotatable arranged on the shaft (29) of the crank assembly (10),
d) a shaft trunnion portion arranged on the drive lever (40) and rotatably accommodated in the mounting disk (37) and non-rotatably engaging through the carrier arm (43) with the driver (42) fixedly arranged thereon.

8. Crank assembly according to one of the claims 5 to 7 characterised thereby that the driven part (45) is a toothed rotary body (38) fixedly arranged on the shaft (29) and in rotatable communication with the toothed driver (42).

9. Crank assembly according to one of the claims 5 to 8, characterised thereby that the carrier arm (43) at its end opposite the toothed driver (42) is pivotably to holding means (55).

10. Crank assembly according to one of the claims 5 to 9, characterised thereby that pistons (11, 12) and connecting rod (17) are adjustable to the crank assembly (10) by way of changing gears (driving gear 18, 19, driven gear 30, 31).

11. Crank assembly according to one of the claims 5 to 10, characterised thereby that the speeds of rotation of the shafts (28, 29) are determined in accordance with the ratio of the number of teeth between the driving gears (18, 19) and the driven gears (30, 31).

## Revendications

1. Transmission à bielle pour des machines à piston, telles que des moteurs à combustion interne, des compresseurs à piston, des pompes à piston ou des machines à piston similaires, avec au moins un piston (11, 12) se déplaçant en va-et-vient dans un cylindre et parcourant alors des longueurs de course, avec une tige de piston (17) reliant le piston (11, 12) à une transmission à bielle (10), la transmission à bielle (10) étant destinée à convertir le mouvement de va-et-vient du piston (11, 12) en un mouvement de rotation ou inversement, la transmission à bielle (10) comprenant deux arbres (28, 29) qui s'étendent coaxialement l'un vers l'autre, avec des extrémités d'arbre (32), disposées face à face et laissant entre elles une distance A, l'extrémité libre rotative de la tige de piston (17), qui relie le piston (11, 12) à la transmission à bielle (10), étant en appui, entre les extrémités d'arbre (32), des deux côtés sur les arbres (28, 29) coaxiaux et étant entraînée en rotation à distance autour des axes coaxiaux des arbres (28, 29) sur une trajectoire circulaire, et comportant des roues motrices (18, 19) conçues de manière non rotative et disposées concentriquement l'une à l'autre de part et d'autre sur l'extrémité libre de la tige de piston (17),
**caractérisée en ce que**
- les roues motrices (18, 19) sont traversées au centre par un arbre de support (20) non rotatif, agencé dans l'extrémité libre de la tige de piston (17) et comportant des extrémités (23, 23a) libres,
- il est prévu des supports rotatifs (26, 27), librement rotatifs sur les arbres (28, 29),
- les extrémités libres (23, 23a) de J'arbre de support (20) s'engagent de manière rotative dans les supports rotatifs (26, 27) dans des coussinets (24, 25), qui sont prévus dans les supports rotatifs (26, 27) à une distance radiale de ceux-ci dans la direction de l'axe longitudinal des supports rotatifs (26, 27), et
- les roues motrices (18, 19) sont conçues pour s'engrener avec des roues (30, 31) entraînées, agencées de manière non rotative sur les extrémités (32) des arbres (28, 29).

2. Transmission à bielle selon la revendication 1, **caractérisée en ce que** les roues dentées motrices (18, 19) sont fixées sur l'extrémité libre de la tige de piston (17).

3. Transmission à bielle selon la revendication 1 ou 2, **caractérisée en ce que** les roues dentées motrices (18, 19) sont agencées au moyen d'un assemblage vissé sur l'extrémité libre de la tige de piston (17).

4. Transmission à bielle selon la revendication 2 ou 3, **caractérisée en ce que** l'arbre de support (20) est agencé au moyen d'une clavette (22) de manière non rotative sur l'extrémité fibre de la tige de piston (17) et dans les roues dentées motrices (18, 19).

5. Transmission à bielle selon l'une quelconque des revendications 1 à 4, **caractérisée en ce qu'**un ou les deux arbres (28, 29) sont reliés à une commande à levier (13).

6. Transmission à bielle selon la revendication 5, **caractérisée en ce que** la commande à levier (13) est formée par une partie motrice (45) et une partie entraînée (46), la partie motrice (45) étant agencée sur un arbre (29) de la transmission à bielle (10) et la partie entraînée (46) étant agencée sur un arbre mené (36), l'arbre (29) et l'arbre mené (36) étant disposés coaxialement, c'est-à-dire dans le prolongement l'un de l'autre et agissant dans la même direction.

7. Transmission à bielle selon la revendication 5 ou 6, **caractérisée en ce que** la partie entraînée (46) comprend
(a) un levier de commande (40) fixé sur l'arbre mené (36),
(b) un bras de support (43) avec des taquets dentés (42), fixés sur son extrémité libre avant et en appui des deux côtés, le bras de support (43) étant solidaire en rotation du levier de commande (40),
(c) une plaque d'appui (37) agencée de manière librement rotative sur l'arbre (29) de la transmission à bielle (10),
(d) un bout d'arbre (41), qui est agencé au niveau du levier de commande (40) et s'engage de manière non rotative à travers le bras de support (43) muni des taquets (42) agencés fermement sur celui-ci, et qui est logé de manière rotative dans la plaque d'appui (37).

8. Transmission à bielle selon l'une quelconque des revendications 5 à 7, **caractérisée en ce que** la partie motrice (45) est un corps de rotation denté (38), agencé fermement sur l'arbre (29) et s'engrenant de manière solidaire en rotation avec le taquet denté (42).

9. Transmission à bielle selon l'une quelconque des revendications 5 à 8, **caractérisée en ce que** le bras de support (43), sur son extrémité opposée au taquet denté (42), est articulé de manière pivotante contre une bride de support (55).

10. Transmission à bielle selon l'une quelconque des revendications 5 à 9, **caractérisée en ce que** le piston (11, 12) et la tige de piston (17) sont réglables pour la transmission à bielle par la permutation des roues dentées (roue motrice 18, 19, roue entraînée 30, 31).

11. Transmission à bielle selon l'une quelconque des revendications 5 à 10, **caractérisée en ce que** les vitesses de rotation des arbres (28, 29) sont définies en fonction du rapport d'engrenage entre les roues dentées motrices (18, 19) et les roues dentées entraînées (30, 31).
